Europäisches Patentamt

**European Patent Office**

**Office européen des brevets**

(11) Veröffentlichungsnummer: **0 101 537**
A1

(12) **EUROPÄISCHE PATENTANMELDUNG**

(21) Anmeldenummer: **83105653.6**

(22) Anmeldetag: **09.06.83**

(51) Int. Cl.³: **B 60 P 3/24**

(30) Priorität: **20.08.82 DE 3231028**

(43) Veröffentlichungstag der Anmeldung: **29.02.84**
Patentblatt 84/9

(84) Benannte Vertragsstaaten: **AT BE CH DE FR GB IT LI NL SE**

(71) Anmelder: **Kirschenlohr, Horst, Römerstr. 23, D-6951 Fahrenbach-Trienz (DE)**

(72) Erfinder: **Kirschenlohr, Horst, Römerstr. 23, D-6951 Fahrenbach-Trienz (DE)**

(74) Vertreter: **Hach, Hans Karl, Dr., Tarunstrasse 23, D-6950 Mosbach-Waldstadt (DE)**

(54) **Einrichtung zum Einsammeln von Milch.**

(57) Eine Einrichtung zum Einsammeln und Abliefern von Milch besteht aus ein oder mehreren Milchsammelfahrzeugen (30), die jeweils einen Milchsammeltank (31) transportieren können, einer Umladestation (8), an der die Milchsammeltanks aufgebockt abgelegt werden können, und einem oder mehreren Tanktransportern, die jeweils mit einer Gruppe dieser Milchsammeltanks beladbar sind und diese zu der entfernt gelegenen Milchverarbeitungsstelle transportieren.

EP 0 101 537 A1

- I -

### Einrichtung zum Einsammeln von Milch

Die Erfindung betrifft eine Einrichtung zum Einsammeln von Milch bei einer Vielzahl von Milcherzeugern zum Abliefern der eingesammelten Milch an einer entfernten Milchverarbeitungsstelle mit mindestens einem Milchsammelfahrzeug, das mit einem Milchsammeltank und zugeordneter Milchannahmeeinrichtung ausgerüstet ist. Die Milchannahmeeinrichtung umfaßt dabei in der Regel Vorrichtungen zum Einpumpen der Milch aus Milchkannen oder dergleichen in den Milchsammeltank, Vorrichtungen zur automatischen Entnahme einer Milchprobe aus der einzupumpenden Milch, Meßvorrichtungen, Vorrichtungen zur Datenerfassung und dergleichen.

Es ist bekannt, zur Durchführung der Milcherfassung und zum Transport der Milch zu einer Molkerei Milchsammelwagen einzusetzen. Fahrzeug, Milchannahmeeinrichtung und Milchsammeltank bilden eine nicht voneinander trennbare Einheit. Beim Transport der großen Milchmengen ist es daher erforderlich, den Inhalt des Sammelwagens in einen eigens dafür bereitgestellten Milchtankanhänger umzupumpen, um erneut mit dem Milchsammelwagen Milch aufnehmen zu können. Anschließend wird die Milch im Milchsammelfahrzeug mit angehängtem Milchtankanhänger abtransportiert. Es ist auch bekannt, mit dem einmal gefüllten Milchsammelwagen gleich in die Molkerei zu fahren.

Wenn nun etwa bis zu 30.000 l Milch täglich gesammelt werden und der Milchsammelwagen 8.000 l fasst, muß das Milchsammelfahrzeug drei- bis viermal in die Molkerei fahren. Diese bekannten, mehr als 20 Jahre eingesetzten Milchsammelfahrzeuge haben folglich mehrere Nachteile, die sich nicht nur wirtschaftlich, sondern auch qualitätsmindernd auswirken. So leidet beim Umpumpen der Milch deren Qualität und das Erfassen, Sammeln und Transportieren der Milch erfordert in der Regel eine längere Zeitspanne und einen längeren Transportweg für die bereits eingesammelte Milch. Hinzu kommt, daß das Milchsammelfahrzeug mit der kostenaufwendigen Milchannahmeeinrichtung vom für die Milcherfassung geschulten Personal zur Molkerei gefahren werden muß, wo die Milch abgeliefert wird. Außerdem muß das Milchsammelfahrzeug, da es auch als Zugfahrzeug für den Milchsammeltankanhänger betrieben wird, mit einem besonders starken Motor ausgestattet sein. Selbst wenn die Milch vom Milchsammelfahrzeug in einen großen Milchtankzug umgepumpt würde, müßte das Sammelfahrzeug wegen der Reinigung des Tanks täglich in die Molkerei gefahren werden. Bei den bekannten Arbeitsverfahren zum Sammeln von Milch ist der Transport aus dem Gebiet der Milcherzeugung zur Molkerei länger und zeitaufwendiger als das Erfassen und Sammeln der Milch.

Es ist auch ein Milchsammelfahrzeug bekannt, dessen Tank abnehmbar ist, damit das Fahrzeug außer für das Milcheinsammeln auch für andere Zwecke benutzbar ist.

Aufgabe der Erfindung ist es, eine Einrichtung der eingangs genannten Art so auszugestalten, daß die eingesammelte Milch einfach und mit großer Transportkapazität in die Milchverarbeitungsstelle gebracht werden kann, ohne daß es nötig ist, die Milch zu diesem Zweck von einem Milchsammeltank in einen anderen, größeren Milchsammeltank umzufüllen.

Die Erfindung ist dadurch gekennzeichnet, daß mehrere gegeneinander austauschbare Milchsammeltanks vorgesehen sind,
daß eine Umladestation zum aufgebockten Ablegen der Milchsammeltanks vorgesehen ist, und
daß ein Tanktransporter, der mit mehreren der Milchsammeltanks beladbar ist, vorgesehen ist.

Nach der Erfindung ist es möglich, die Milchsammelfahrzeuge lokal operieren zu lassen, so daß diese und das zugehörige geschulte Personal dabei optimal eingesetzt werden können. Man benötigt insgesamt weniger der aufwendigen Milchsammelfahrzeuge bei vergleichbarem Sammelvolumen.

Die gefüllten Milchsammeltanks können an der in der Nähe gelegenen Umladestation abgegeben und gegen leere Milchsammeltanks ausgetauscht werden. An der Umladestation nimmt der Tanktransporter die gefüllten Milchsammeltanks gruppenweise auf, transportiert sie zu der Milchverarbeitungsstelle und nimmt die geleerten, vorzugsweise auch gereinigten, Milchsammeltanks wieder zurück zur Umladestation.

Die Milchannahmeeinrichtung des Milchsammelfahrzeugs, die zweckmäßig wie auch bei bekannten Fahrzeugen unmittelbar hinter dem Fahrerhaus angeordnet ist, ist fest auf dem Milchsammelfahrzeug installiert und verbleibt dort. An diese Milchannahmeeinrichtung ist der auswechselbare, jeweils aufgesetzte Milchsammeltank über lösbare Leitungen anschließbar.

Durch die Anordnung der Milchannahmeeinrichtung unmittelbar hinter dem Fahrerhaus kann der zur Aufnahme der zur Molkerei zu befördernden Milch bestimmte Milchsammeltank leicht auswechselbar am Fahrgestell angebracht werden. Das Milchsammelfahrzeug selbst kann dann ausschließlich für die Milcherfassung eingesetzt werden und dieses Fahrzeug muß nicht zur Molkerei gefahren werden.

Die Milchannahmeeinrichtung muß wohl gereinigt werden, doch dies kann außerhalb der Molkerei jeweils an der Einsatzstelle des Fahrzeugs erfolgen, und zwar mit ähnlichen Geräten und Apparaten, wie sie zum Reinigen von Rohrmelkanlagen verwendet werden, oder mit einfacheren Geräten.

Der Milchsammeltank auf dem Fahrgestell wird mit der durch die Milchannahmeeinrichtung erfassten Milch gefüllt und an die für Großfahrzeuge leicht erreichbare, aber nahegelegene Umladestation gefahren und da abgestellt. Falls erforderlich wird dann ein leerer Tank aufgeladen und das Fahrzeug mit der Milchannahmeeinrichtung kann erneut die vom Bauern bereitgestellte Milch erfassen und sammeln. Ein Umpumpen der Milch aus einem Tank in einen anderen ist nicht erforderlich, so daß die Qualität der Milch nicht beeinträchtigt wird. Außerdem kommt die Milch in größeren Mengen und frischerem Zustand zur Molkerei, denn der größere Tanktransporter holt die einzelnen gefüllten Sammeltanks und bringt diese auf direktem Weg zur Molkerei. Nach dem Abladen und Abliefern der Milch in der Molkerei kann der Tanktransporter gleich wieder losfahren und weitere mit Milch gefüllte Tanks einsammeln. Der große Tanktransporter kann somit je nach Größe mehrere Milchsammeltanks aus dem Gebiet der Milcherzeugung befördern, während gleichzeitig das Milchsammelfahrzeug Milch erfassen und sammeln kann.

Bei der Milchannahme werden regelmäßig Milchproben auf einen Probebehälter abgezogen, was unter anderem zur Identifizierung eines Milcherzeugers dient, der qualitativ ungeeignete Milch angeliefert hat. Um die Zuordnung und damit die Identifizierung zu erleichtern, dient eine Weiterbildung, die dadurch gekennzeichnet ist, daß an jedem Milchsammeltank ein Transportkasten zur Aufnahme von Milchproben befestigt ist. Die Milchproben bleiben dann bis zur Ablieferung an der Milchverarbeitungsstelle bei dem zugehörigen Sammeltank.

Beim Entleeren des Tanks muß sichergestellt sein, daß die Milch und auch die Reinigungsflüssigkeit einwandfrei abläuft. Dazu sind entsprechende Schrägneigungen des Tankbodens, die auf unten am Tank angebrachte Abläufe zu gerichtet sind, bekannt. Wenn die mit dem Tanktransporter bei der Milchverarbeitungsstelle angelieferten Tanks leerlaufen sollen, dann stehen sie bei vielen Ausführungsformen von Tanktransportern nicht horizontal, weil die Ladebühne vieler Transportfahrzeuge, insbesondere wenn es sich um Sattelfahrzeuge handelt, nach hinten geneigt ist. Die Neigung kann noch verstärkt werden durch eine ungleiche Belastung der Ladebühne, die sich beim Entladen ergeben kann.

Um auch unter zu erwartenden ungünstigen Bedingungen einen sicheren Ablauf zu gewährleisten, empfiehlt es sich, die Neigung des auf die Ablaßöffnungen zugerichteten Gefälles im Boden des Milchsammeltanks mit mindestens 2,5° auszugestalten.

Wird der Milchsammeltank, wie vorzugsweise der Fall, in der Form eines liegenden Zylinders ausgebildet, so daß die Tanks mit ihrer Zylinderachse in Fahrtrichtung weisend auf den Fahrzeugen verladen werden können, dann ergibt sich eine günstige Raumausnutzung auf der Ladebühne des Fahrzeuges unter Berücksichtigung der maximal zulässigen Breite und Höhe des Ladungsaufbaues. Das für die Beladung dann zur Verfügung stehende Volumen wird aber eingeschränkt, wenn man die Bodenneigung entlang der Zylinderachse größer als unbedingt nötig gestaltet. Aus diesem Grund empfiehlt es sich, entlang der Längsrichtung der Zylinderform die Bodenneigung auf höchstens 3° zu bemessen.

Die Erfindung wird nun anhand der beigefügten Zeichnung näher erläutert.

In der Zeichnung zeigt:

Figur 1   schematisch eine Einrichtung zum Einsammeln von Milch,

Figur 2   ein beladenes Milchsammelfahrzeug perspektivisch von der Seite gesehen,

Figur 3   den Milchsammeltank aus Figur 2, aufgebockt abgestellt bei der Umladestation,

Figur 4   das leere Milchsammelfahrzeug,

Figur 5   ein anderes Milchsammelfahrzeug von der Seite gesehen,

Figur 6   die Ansicht gemäß dem Pfeil VI aus Figur 5, jedoch ohne das Fahrerhaus,

Figur 7   die Ansicht gemäß dem Pfeil VII aus Figur 5, jedoch ohne das Fahrwerk,

Figur 8   einen mit drei Milchsammeltanks beladenen Tanktransporter von der Seite gesehen, jedoch ohne Fahrerhaus,

Figur 9   den Sattelanhänger aus Figur 8 in der Ansicht gemäß Pfeil IX,

Figur 10  einen beladenen Bock der Umladestation in Fahrtrichtung gesehen, und

Figur 11  in der Ansicht gemäß dem Pfeil XI abgebrochen den Bock aus Figur 10.

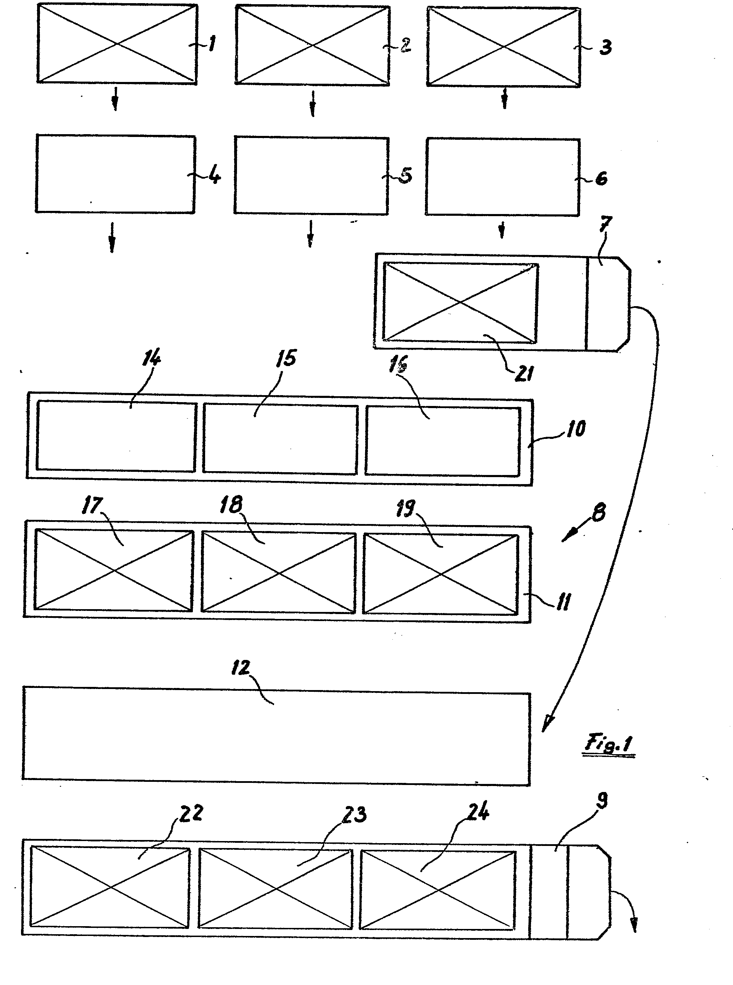

Gemäß Figur 1 sind mit 1 bis 6 die Bauernhöfe von Milchbauern bezeichnet, die mit einigen Kilometern Distanz in einem begrenzten Gebiet liegen mögen. Mit 7 ist ein Milchsammelfahrzeug, mit 8 die Umladestation und mit 9 ein Tanktransporter bezeichnet. Die Umladestation 8 weist drei Lagerböcke 10, 11, 12 zum Aufbocken von jeweils drei Milchsammeltanks 14 bis 19 auf. Das Milchsammelfahrzeug 7 trägt einen Milchsammeltank 21, während der Tanktransporter 9 drei Milchsammeltanks 22, 23, 24 trägt.

Die Kreuze in den Kästen sollen andeuten, daß Milch vorhanden ist, leere Kästen gelten entsprechend für leere Situation.

Das Milchsammelfahrzeug 7 hat die Bauernhöfe 4 bis 6 abgefahren und deren Milch im Milchsammeltank 21 aufgenommen. Das Milchsammelfahrzeug 7 fährt nun zur Umladestation 8, die zentral im Bereich einer größeren Gruppe von Milcherzeugern gelegen ist, und lädt den gefüllten Milchsammeltank 21 auf
dem Lagerbock 12 ab und nimmt einen leeren Milchsammeltank 16
vom Lagerbock 10 ab und fährt dann die Bauernhöfe 1, 2 und 3
ab, um die Milch dort einzusammeln, und so fort.

Der Tanktransporter 9 kam von der weit entfernt gelegenen
Milchverarbeitungsstelle, zum Beispiel einer Molkerei, zurück
beladen mit drei leeren Milchsammeltanks 14, 15, 16, die er
auf dem Lagerbock 10 abgestellt hat. Anschließend hat er die
auf dem Lagerbock 12 bereitgestellten, gefüllten Milchsammeltanks 22, 23, 24 aufgenommen und fährt diese nun zur Milchverarbeitungsstelle.

Von der Umladestation 8 werden mit weiteren, nicht dargestellten Milchsammelfahrzeugen eine große Vielzahl weiterer, nicht
dargestellter Milcherzeuger bedient, die aber alle regional so
zusammengefaßt sind, daß die Milchsammelfahrzeuge nur geringe
Entfernungen zurücklegen müssen, während die große Distanz
zur Milchverarbeitungsstelle durch den Tanktransporter überwunden wird. Bei großem Bedarf können mehr als drei Lagerböcke in der Umladestation vorgesehen sein, in manchen Fällen
genügen auch zwei oder gar nur ein einziger Lagerbock. Bei
Bedarf können mehrere Tanktransporter im Wechsel zwischen der
Umladestation und der Milchverarbeitungsstelle hin- und herpendeln.

Die Milchsammeltanks werden auf der Umladestation immer
gruppenweise zusammengefaßt, dicht aneinandergereiht abgestellt, so wie sie auch unter optimaler Ausnutzung der Ladebühne des Tanktransporters auf diesem Platz finden. Im vorliegenden Fall umfaßt eine Gruppe drei Milchsammeltanks. Wenn
der Tanktransporter eine andere Zahl, zum Beispiel zwei,
vier oder fünf, Milchsammeltanks aufnehmen kann, umfaßt eine
abgestellte Gruppe eine entsprechende Anzahl. Alle Milchsammeltanks sind identisch zueinander ausgebildet und gegeneinander austauschbar.

Die Ladebühnen der Umladestation sind zweckmäßig so ausgestaltet, daß das Milchsammelfahrzeug und der Tanktransporter in die betreffende Ladebühne einfahren kann, so daß die Ladung vollständig übergeben werden kann durch Einsatz entsprechender hydraulischer Hebezeuge, wie es im einzelnen noch weiter unten erläutert wird.

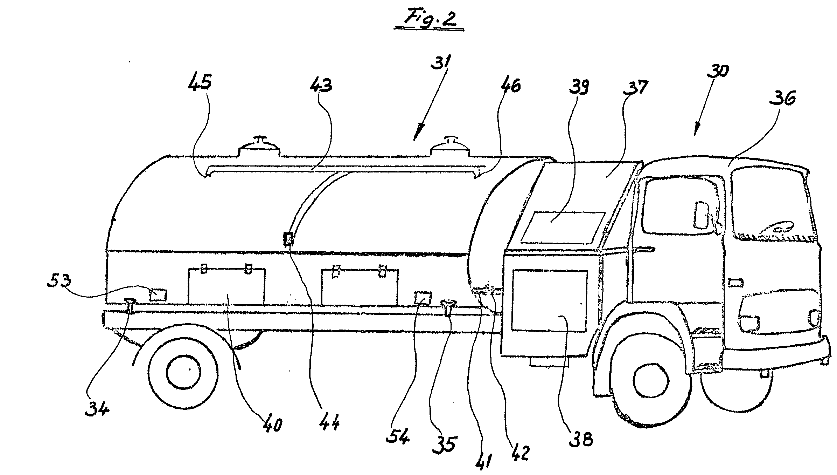

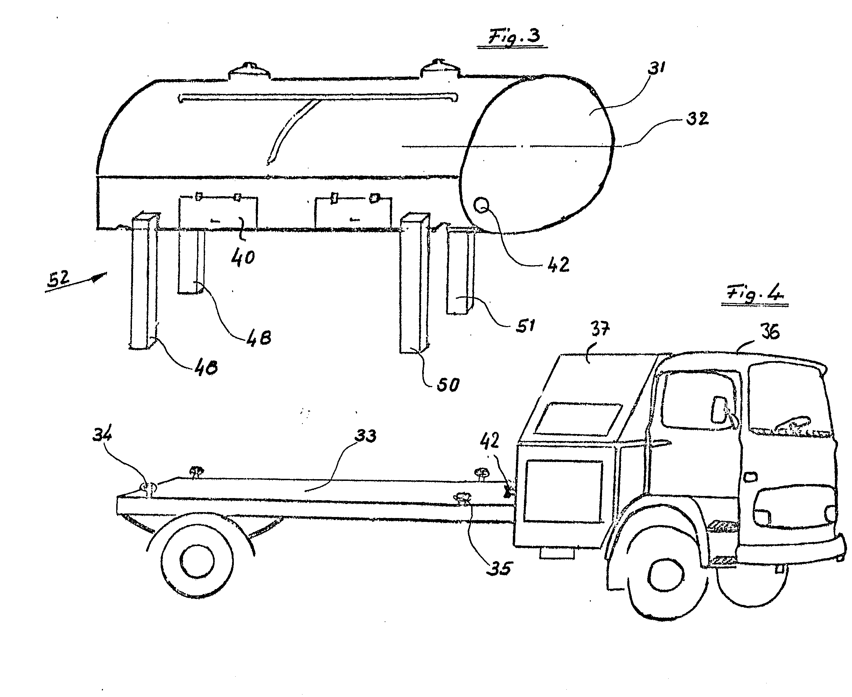

Das in Figur 2 bis 4 dargestellte Milchsammelfahrzeug 30 ist mit einem Milchsammeltank 31 beladbar, der die Form eines langgestreckten Zylinders hat und mit seiner Längsachse 32 in Fahrtrichtung auf der Ladebühne 33 des Milchsammelfahrzeuges aufladbar ist und austauschbar ist gegen andere, gleichartig ausgebildete Milchsammeltanks. Für die Fahrt wird der Milchsammeltank auf dem Milchsammelfahrzeug durch verriegelbare Halterungen 34, 35 festgelegt. Zwischen dem Fahrerhaus 36 und dem Milchsammeltank 31 ist eine Milchannahmeeinrichtung 37 stationär am Milchsammelfahrzeug befestigt. Diese Milchannahmeeinrichtung umschließt einen Trockenraum 38 und einen Raum 39, in dem eine Einrichtung zur selbsttätigen Entnahme von Milchproben von der angelieferten Milch untergebracht ist. Diese Milchproben werden auf Probebehälter abgezogen, die dann von der Bedienungsperson in einem Transportkasten 40 untergebracht und aufbewahrt werden. Der Transportkasten 40 ist an dem Milchsammeltank 31 befestigt. Die Milchannahmeeinrichtung 37 umfaßt ein von außen zugängliches Leitungssystem 41, das mit Ventilen, zum Beispiel dem Ventil 42, ausgestattet und an eine Pumpe angeschlossen ist, mit der, von einem äußeren Ansaugstutzen ausgehend, die in Kannen oder dergleichen bereitgestellte, angelieferte Milch abgesaugt und in den Milchsammeltank 31 gepumpt werden kann. Außerdem sind in der Milchannahmeeinrichtung ein Zählwerk mit Datenübertragung, eine Standheizung und weitere zur Milchannahme erforderliche Gerätschaften und Anlagen untergebracht.

Bei Betrieb ist der aufgesetzte Milchsammeltank über entsprechende Kupplungen an das Leitungssystem der Milchannahmeeinrichtung angeschlossen und zum Abnehmen des Tanks werden die Leitungen durch entsprechende Ventile abgesperrt und die Kupplungen gelöst.

Der Milchsammeltank 31 ist mit einer Reinigungsanlage 43 ausgestattet, die fest am Milchsammeltank verlegt ist und von einem von außen zugänglichen Anschluß für Reinigungsflüssigkeit 44 ausgeht und in ein oder mehreren Spritzdüsen 45, 46 mündet, die im Inneren des Milchsammeltanks 31 befestigt sind.

Zum Abladen und Beladen fährt das Milchsammelfahrzeug 30 zwischen die Stützen 48 bis 51 einer Ladebühne 52. Der gelöste Milchsammeltank 31 wird dann an den oberen Enden der Stützen 48 bis 51 befestigt, wozu Querträger dienen können, die in rechteckige Kanäle 53, 54 eingesteckt werden. Die Kanäle 53, 54 sind zur Seite des Milchsammeltanks 31 offen und erstrecken sich quer zur Fahrtrichtung. Sobald der Milchsammeltank an die Stützen 48 bis 51 angekuppelt ist, wird er durch eine Hubeinrichtung angehoben, so daß das Milchsammelfahrzeug leer abfahren kann, und bleibt aufgebockt, bis er auf die Ladebühne eines entsprechend eingefahrenen Tanktransporters wieder abgesenkt werden kann. Mit dem leeren Milchsammeltank wird entsprechend umgekehrt verfahren.

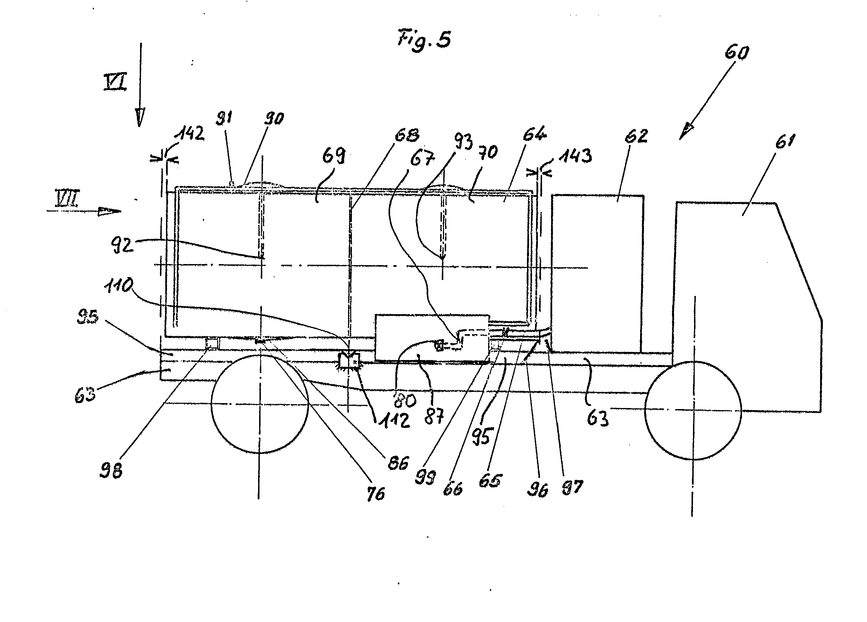

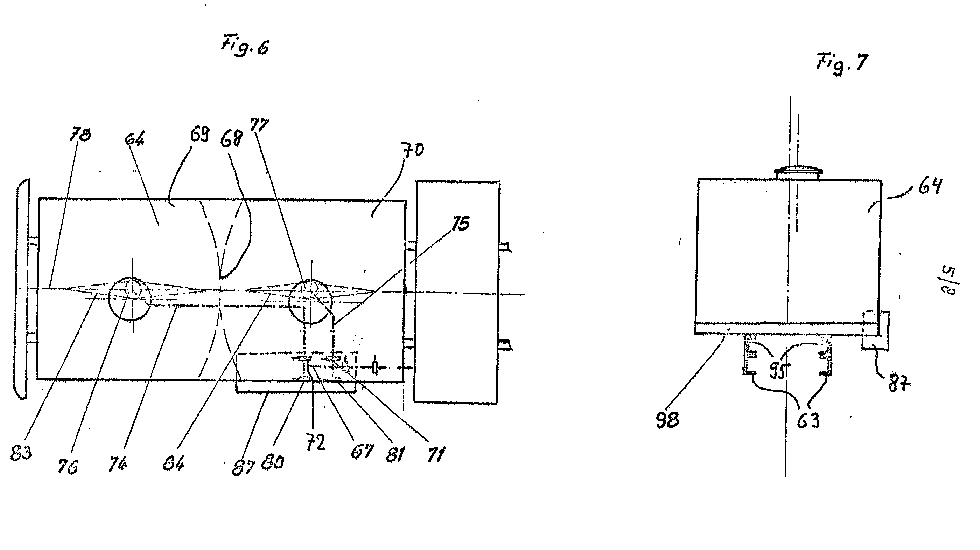

In Figur 5 bis 7 ist mit 60 ein Milchsammelfahrzeug bezeichnet, dessen Fahrerhaus mit 61, dessen hinter dem Fahrerhaus angeordnete, stationäre Milchannahmeeinrichtung mit 62 und dessen auf die Ladebühne 63 aufsetzbarer Milchsammeltank mit 64 bezeichnet ist. Die Milchannahmeeinrichtung 62 ist über eine durch ein Ventil absperrbare Anschlußleitung 65 und eine lösbare Kupplung 66 an eine Verteilerschaltung 67 des Milchsammeltanks angeschlossen. Der Milchsammeltank hat die Form eines langgestreckten, liegenden Zylinders und ist durch eine in der Mitte gelegene Trennwand 68 in zwei etwa gleichgroße Behälter 69, 70 unterteilt.

Die Milchsammeltanks sind nur der Einfachheit halber rechteckig dargestellt. Tatsächlich sind sie kofferförmig ausgebildet, also mit nach außen gewölbtem Boden, nach außen gewölbten Seitenwandungen und nach außen gewölbter Deckwandung und mit abgerundeten Kanten und Ecken ausgeführt. Durch diese Wölbungen und Abrundungen bleibt unten seitlich entlang der Kanten Platz für die Unterbringung der Verteilerschaltung.

Die mit Ventilen 71, 72 und Leitungsverzweigungen ausgestattete Verteilerschaltung gestattet es, die über die Leitung 65 unter Pumpendruck angelieferte Milch in den einen Behälter 69 oder in den anderen Behälter 70 fließen zu lassen. Die Anschlußleitungen 74, 75 an die beiden Behälter 69, 70 münden in Ablaßöffnungen 76, 77 dieser Behälter, die entlang der unteren Mittellinie 78 des Milchsammeltanks 64 jeweils in der Mitte der beiden Behälter 69, 70 angeordnet sind. Über diese Leitungen 74, 75 kann die Milch und gegebenenfalls auch die Reinigungsflüssigkeit wieder abgelassen werden. Das Leitungssystem mündet zu diesem Zweck in von außen zugänglichen Anschlußkupplungen 80, 81. Die Ablaßöffnungen 76, 77 sind verschließbar.

Der Boden 82 des Milchsammeltanks 64, der tatsächlich, wie bereits erwähnt, nach unten gewölbt ist, ist in seinem flachen Teil durch eine zusätzlich über die Wölbung hinaus nach unten vorspringende Rinne, die durch die strichpunktierten Linien 83, 84 angedeutet ist, auf die Ablaßöffnungen 76, 77 zugeneigt, und zwar so, daß sich an jeder Stelle des Bodens 82 eine Mindestneigung von $2,5^O$ ergibt. Die Neigung des Behälterbodens 82 entlang der unteren Mittellinie 78 ist jedoch nicht größer als $3^O$ jeweils auf die Ablaßöffnung 76, 77 zu geneigt. Durch diese Neigung ergibt sich für jede Ablaßöffnung 76, 77 ein Auslauftrichter 86, an dessen unterem Ende die zugehörige Ablaßöffnung 76 liegt.

Am Milchsammeltank 64 befestigt ist ein Transportkasten 87 zur Aufnahme der Behälter für die Milchproben und der Verteilerschaltung. Die Milchproben werden in diesem Transportkasten 87 zusätzlich gekühlt durch die dort durchströmende gekühlte Milch.

Am Milchsammeltank verlegt ist eine Reinigungsanlage 90, die von einem von außen zugänglichen Anschluß 91 für Reinigungsflüssigkeit ausgeht und in zwei Sprühdüsen 92, 93 mündet, die im Inneren des Milchsammeltanks befestigt sind und mit ihrem Sprühstrahl bei Betrieb die gesamte Innenwandung des Milchsammeltanks treffen.

Der Milchsammeltank 64 weist einen stabilen Tragrahmen 95 auf, auf dem er festsitzend montiert ist. Der Tragrahmen 95 paßt auf die Ladebühne 63 des Milchsammelfahrzeugs 60 und auf die Ladebühne des weiter unten noch zu beschreibenden Tanktransporters. Er überragt den Milchsammeltank 64 in der Länge mit Toleranz und ist an seinem vorderen und/oder hinteren Ende mit Puffern 96 ausgestattet, die Stöße auffangen sollen, wenn beim Aneinanderreihen mehrerer Milchsammeltanks diese dicht aneinandergerückt werden. Für den vorgesehenen, vorn angebrachten Puffer 96 ist ein Gegenpuffer 97 am vorderen Ende der Ladebühne 63 angebracht, der Stöße beim Aufladen des Milchsammeltanks auffangen soll.

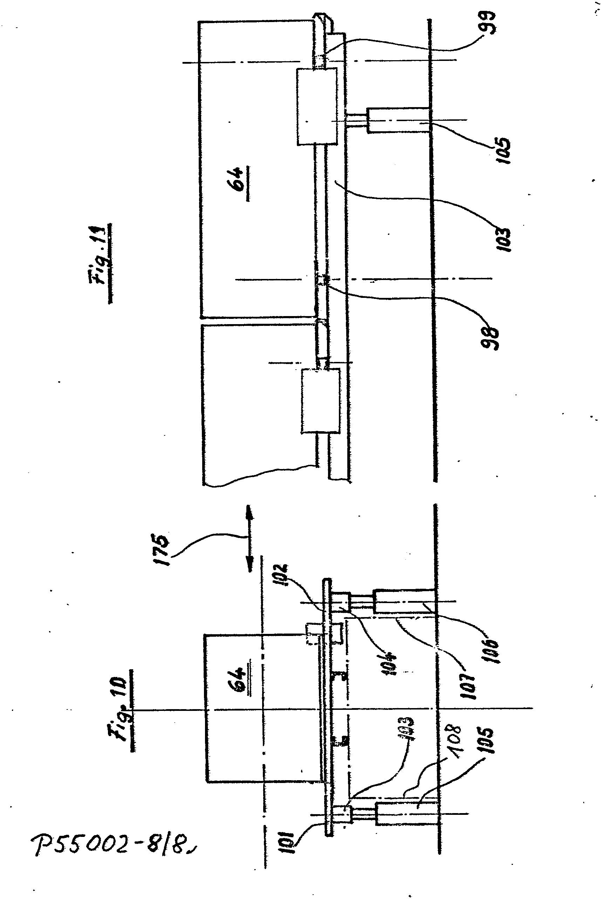

Am Tragrahmen 95 befestigt sind zwei sich quer zur Fahrtrichtung erstreckende, hohle Vierkantprofilstangen 98, 99, in die Tragstangen 101, 102 (vergleiche Figur 10 und 11 ) gesteckt werden können, mit denen der Milchsammeltank auf anhebbar und absenkbar angeordneten, horizontalen Tragschienen 103, 104 abgesetzt werden kann. Die Tragschienen 103, 104 sind durch Hydraulikeinrichtungen 105, 106 höhenverstellbar und bieten zwischen sich genügend Platz, so daß das Milchsammelfahrzeug oder der Tanktransporter mit seiner Ladebühne dazwischen Platz findet. Der entsprechende Platzbedarf, der zur Verfügung steht und ausreicht, ist durch die strichpunktierten Linien 107, 108 angedeutet.

Am Tragrahmen 95 sind Zentrierungselemente und Zentrierungskanten angeordnet, die bei aufgesetztem Milchsammeltank in entsprechende Gegenelemente der Ladebühne des Milchsammelfahrzeuges passend bemessen sind, derart, daß bei positioniertem Aufsetzen des Milchsammeltanks dieser durch die Zentrierungselemente und Gegenelemente in eine vorbestimmte Stellung exakt zentriert wird und dann auch gegen Verrutschen gesichert ist. Auf jeder Seite sind drei Gegenelemente, jeweils eines hinten, eines vorn und eines in der Mitte, an der Ladebühne des Milchsammelfahrzeuges angeordnet. Das mittlere Gegenelement ist in Figur 5 sichtbar und mit 112 bezeichnet. Die übrigen Gegenelemente sind der Übersicht halber in den Figuren nicht eingezeichnet. Mit dem Gegenelement 112 wirkt ein Zentrierungselement 110 zusammen, das am Tragrahmen 95 befestigt ist, während die beiden anderen Gegenelemente mit der Vorderkante und der Hinterkante des Tragrahmens zusammenwirken. Außerdem wird der Tragrahmen 95 durch nicht dargestellte Befestigungselemente für den Transport an der Ladebühne 63 befestigt.

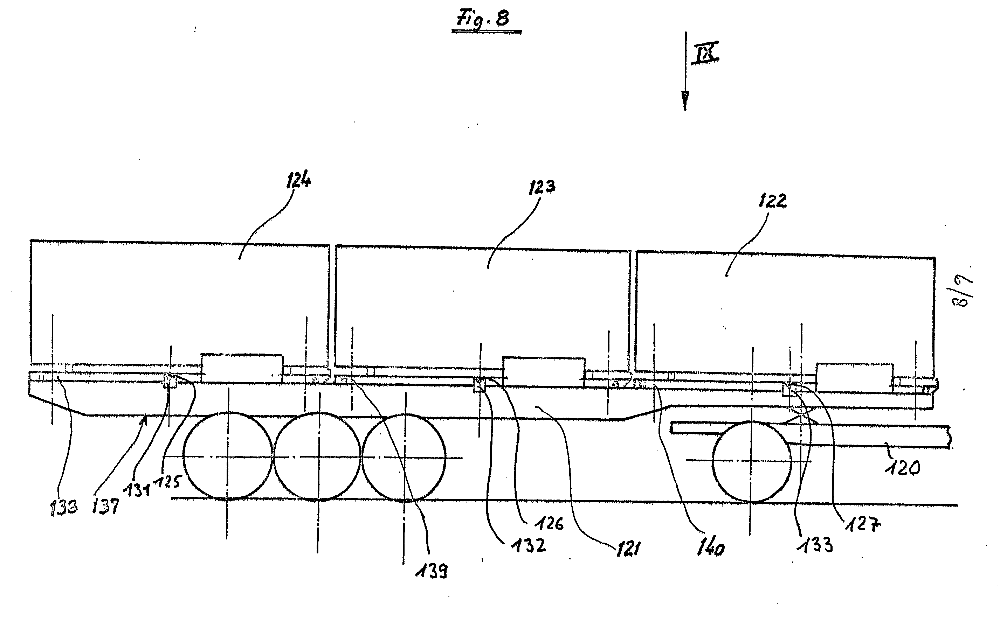

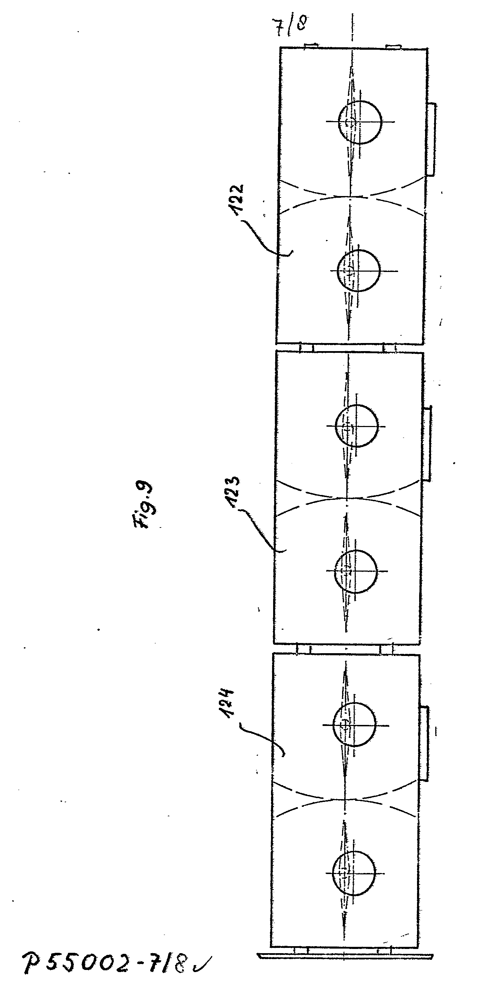

Der in Figur 8 und 9 dargestellte Tanktransporter ist ein Sattelzug, dessen nur teilweise sichtbare Zugmaschine mit 120 und dessen Sattelanhänger mit 121 bezeichnet ist. Auf den Sattelanhänger 121 passen mit ihrer Längsachse in Fahrtrichtung dicht hintereinander drei Milchsammeltanks 122, 123, 124, die genauso ausgebildet sind wie der Milchsammeltank 64 und auch genauso bemessen sind wie dieser, mithin also gegenseitig austauschbar sind. Für die Zentrierungselemente und Zentrierungskanten der aufzuladenden Milchsammeltanks 122 bis 124 sind entsprechend passende Gegenelemente an der Ladebühne 137 des Sattelanhängers 121 vorgesehen, die die aufgesetzten Milchsammeltanks dicht aneinandergerückt zentrieren, wie dargestellt. In Figur 8 sind entsprechend wie in Figur 5 nur die dem Zentrierungselement 110 entsprechenden Zentrierungselemente 125, 126, 127 und die dem Gegenelement 112 entsprechenden Gegenelemente 131, 132, 133 dargestellt. Diejenigen Gegenelemente, die mit den Vorder- und Hinterkanten der Ladebühne zusammenwirken und die in Figur 5 nicht dargestellt sind, sind auch in Figur 8 nicht dargestellt aber entsprechend ausgebildet. Außerdem sind nicht dargestellte, lösbare Befestigungselemente vorgesehen, mit denen die Tragrahmen 138, 139, 140 an der Ladebühne 137 befestigt werden können.

Bei dem in den Figuren 5 bis 9 dargestellten Ausführungsbeispiel hat jeder Milchsammeltank die Form eines liegenden Zylinders und ist durch eine Mittelwand in zwei gleichgroße Behälter unterteilt, die insgesamt 9.000 l fassen. Das Milchsammelfahrzeug 60 hat eine Beladekapazität von 9 t. Die Umladestation 8 gemäß Figur 1 ist zum Abstellen von drei Gruppen von dicht hintereinander angeordneten Milchsammeltanks ausgerüstet, wobei jede Gruppe drei Milchsammeltanks umfaßt, zum Beispiel die Milchsammeltanks 14, 15, 16. Der Tanktransporter 120, 121 ist zum Transport jeweils einer solchen Gruppe, umfassend beispielsweise die Milchsammeltanks 122, 123, 124, ausgerüstet und hat eine Beladekapazität von mindestens 24 t, vorzugsweise 27 t.

0101537

P 55 002
31.5.83.

Ansprüche :

1. Einrichtung zum Einsammeln von Milch bei einer Vielzahl von Milcherzeugern zum Abliefern der eingesammelten Milch an einer entfernten Milchverarbeitungsstelle mit mindestens einem Milchsammelfahrzeug, das mit einem Milchsammeltank und zugeordneter Milchannahmeeinrichtung ausgerüstet ist, dadurch gekennzeichnet, daß mehrere gegeneinander austauschbare Milchsammeltanks ( 14 - 19 ) vorgesehen sind,
daß eine Umladestation ( 8 ) zum aufgebockten Ablegen der Milchsammeltanks ( 14 - 19 ) vorgesehen ist, und
daß ein Tanktransporter ( 9 ), der mit mehreren der Milchsammeltanks ( 22, 23, 24 ) beladbar ist, vorgesehen ist.

2. Einrichtung nach Anspruch 1, dadurch gekennzeichnet, daß an jedem Milchsammeltank ( 31, 64 ) ein Transportkasten ( 40, 87 ) zur Aufnahme von Milchproben befestigt ist.

3. Einrichtung nach Anspruch 1 oder 2, dadurch gekennzeichnet, daß für jeden Milchsammeltank ( 64 ) ein stabiler Tragrahmen ( 95 ) vorgesehen ist, auf den der Milchsammeltank ( 64 ) montiert ist und der auf die Ladebühne ( 63 ) des Milchsammelfahrzeugs ( 60 ), auf die Ladebühne ( 137 ) des Tanktransporters ( 121 ) und auf eine Abstellbühne (103, 104) der Umladestation ( 8 ) passend bemessen ist, und der in der Länge den zugehörigen Milchsammeltank ( 64 ) mit Toleranz überragt und an seinem vorderen und/oder hinteren Ende mit Puffern ( 96 ) ausgestattet ist.

4. Einrichtung nach einem der vorhergehenden Ansprüche, gekennzeichnet durch Zentrierungselemente ( 111, 125 ... ) am Tragrahmen (95, 138.), die mit Gegenelementen ( 112, 131 ...) an der Ladebühne (63; 137) des Milchsammelfahrzeugs ( 60 ) und des Tanktransporters ( 121 ) abgestimmt bemessen sind, derart, daß sie beim positionierten Aufsetzen der Milchsammeltanks (64,124.) diesen in eine vorbestimmte

0101537

P 55 002
31.5.83.

Stellung zentrieren.

5. Einrichtung nach Anspruch 4, dadurch gekennzeichnet, daß auf der Ladebühne ( 137 ) des Tanktransporters ( 121 ) Gegenelemente (131,132,133) für zwei oder mehr, vorzugsweise drei, in Fahrtrichtung dicht hintereinander abgestellte Milchsammeltanks (122,123,124 ) vorgesehen sind.

6. Einrichtung nach Anspruch 3, gekennzeichnet durch einen Puffer ( 96 ) vorn am Tragrahmen ( 95 ) mit zugeordnetem Gegenpuffer ( 97 ) am Milchsammelfahrzeug ( 60 ).

7. Einrichtung nach einem der vorhergehenden Ansprüche, dadurch gekennzeichnet, daß unten in der Längsmitte eines Milchsammeltanks ( 64 ) ein oder mehrere auf die Länge verteilt angeordnete, verschließbare Ablaßöffnungen ( 76, 77 ) vorgesehen sind, und daß im Boden ( 82 ) des Milchsammeltanks ( 64 ) ein Gefälle vorgesehen ist, das auf diese Ablaßöffnungen geneigt ist, und zwar - abgestellt auf einer horizontalen Bühne - mit einer Neigung von mindestens 2,5 $^{\circ}$ an jeder Stelle.

8. Einrichtung nach einem der vorhergehenden Ansprüche, gekennzeichnet durch eine fest am Milchsammeltank ( 31, 60 ) verlegte Reinigungsanlage ( 43, 90 ), die von einem von außen zugänglichen Anschluß ( 44 ) ausgeht und in ein oder mehrere Sprühdüsen ( 45,46;92,93 ) mündet, die im Inneren des Milchsammeltanks ( 31, 60 ) befestigt sind.

9. Einrichtung nach einem der vorhergehenden Ansprüche, dadurch gekennzeichnet, daß ein Milchsammeltank ( 64 ) die Form eines liegenden Zylinders hat und durch eine Mittelwand ( 68 ) in zwei etwa gleichgroße Behälter ( 69, 70 ) unterteilt ist, die insgesamt circa 9000 l (Liter) fassen, daß ein Milchsammelfahrzeug ( 60 ) eine Beladekapazität von circa 9 t (Tonnen) hat,

daß die Umladestation ( 8     ) zum Abstellen von einer
oder mehreren Gruppen (17, 18, 19) von dicht hintereinander
angeordneten Milchsammeltanks ( 17 ...    ) ausgerüstet ist,
wobei jede Gruppe drei Milchsammeltanks umfaßt, und
daß ein Tanktransporter ( 121    ) zum Transport einer solchen
Gruppe ( 22, 23, 24 ) ausgerüstet ist und eine Beladekapazität von mindestens 24 t (Tonnen ) hat.

*Fig.1*

P 55002 - 118

2/8

Fig.2

Fig.3

31

32

40

52

48

48

50

51

42

Fig.4

37

36

34

33

42

35

Fig.5

Fig.7

Fig.6

0101537

IX

Fig. 8

6/8

120
127
133
122
140
121
126
132
123
139
124
125
131
137
130

7/8

0101537

122

123

124

Fig.9

P55002-7/8

## Fig. 10

**64**

175

101      102

104

103

108    107    106

105

## Fig. 11

**64**

98     103    105     99

0101537

Europäisches Patentamt

**EUROPÄISCHER RECHERCHENBERICHT**

Nummer der Anmeldung

EP 83 10 5653

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| X | US-A-3 421 646 (ROUSE et al.)<br><br>* Spalte 5, Zeile 57 - Spalte 6, Zeile 37; Spalte 4, Zeilen 9-37; Abbildungen 1-6 * | 1,3-6, 9 | B 60 P 3/24 |
| A | US-A-2 119 742 (HILL)<br>* Seite 3, linke Spalte, Zeilen 53-68; Abbildungen 1-5 * | 2 | |
| A | US-A-2 113 803 (GEORGE)<br>* Seite 1, rechte Spalte, Zeilen 33-57; Abbildungen 2,3 * | 7 | |
| A | US-A-2 297 840 (PFEIFFER)<br>* Seite 1, rechte Spalte, Zeilen 53-58; Abbildungen 4,5 * | 7 | |
| A | DE-B-1 235 341 (BERGERDORFER EISENWERK)<br>* Spalte. 4, Zeilen 3-5, 13-16; Abbildung 1 * | 1,8,9 | RECHERCHIERTE SACHGEBIETE (Int. Cl. 3)<br><br>B 60 P 3/00 |

Der vorliegende Recherchenbericht wurde für alle Patentansprüche erstellt.

| Recherchenort | Abschlußdatum der Recherche | Prüfer |
|---|---|---|
| DEN HAAG | 10-11-1983 | OSBORNE J. |